(19) Europäisches Patentamt
European Patent Office
Office européen des brevets

(11) **EP 3 422 561 B1**

(12) **EUROPÄISCHE PATENTSCHRIFT**

(45) Veröffentlichungstag und Bekanntmachung des Hinweises auf die Patenterteilung:
**28.07.2021 Patentblatt 2021/30**

(51) Int Cl.:
***H02P 21/22*** *(2016.01)*

(21) Anmeldenummer: **17178448.1**

(22) Anmeldetag: **28.06.2017**

(54) **BETRIEBSVERFAHREN FÜR EINE ASYNCHRONMASCHINE MIT ANGEPASSTEM FELDBILDENDEM STROMANTEIL**

CONTROL METHOD FOR AN ASYNCHRONOUS MACHINE WITH ADAPTED FIELD-BUILDING POWER SECTION

PROCÉDÉ CONTRÔLE POUR UNE MACHINE ASYNCHRONE COMPRENANT UNE PROPORTION DE COURANT ADAPTÉE FORMANT UN CHAMP

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(43) Veröffentlichungstag der Anmeldung:
**02.01.2019 Patentblatt 2019/01**

(73) Patentinhaber: **Siemens Aktiengesellschaft 80333 München (DE)**

(72) Erfinder:
• **Reh, Jörg**
  **91096 Möhrendorf (DE)**
• **Spindler, Carsten**
  **07368 Remptendorf (DE)**
• **Stoiber, Dietmar**
  **90763 Fürth (DE)**
• **Wedel, Bernd**
  **91096 Möhrendorf (DE)**

(56) Entgegenhaltungen:
DE-A1-102012 107 065   US-A1- 2002 030 465
US-B1- 6 965 212

**Beschreibung**

Die vorliegende Erfindung geht aus von einem Betriebsverfahren für eine Asynchronmaschine, die einen Stator und einen Rotor aufweist, wobei im Stator eine Statorwicklung angeordnet ist,

- wobei eine Steuereinrichtung einen Umrichter ansteuert, so dass der Umrichter die Statorwicklung an ein Versorgungsnetz anschaltet, so dass in der Statorwicklung ein Statorstrom fließt,
- wobei der Statorstrom einen feldbildenden Stromanteil und einen momentbildenden Stromanteil aufweist,
- wobei die Steuereinrichtung den Umrichter derart ansteuert, dass während Lastzeiträumen zwischen dem Stator und dem Rotor ein Drehmoment wirkt, das zumindest temporär oberhalb eines vorbestimmten Grenzmoments liegt und dessen Maximum ein Mehrfaches des vorbestimmten Grenzmoments beträgt,
- wobei die Lastzeiträume durch Pausenzeiträume voneinander getrennt sind,
- wobei die Steuereinrichtung den Umrichter während der Pausenzeiträume derart ansteuert, dass zwischen dem Stator und dem Rotor ein Drehmoment wirkt, das permanent unterhalb des vorbestimmten Grenzmoments liegt,
- wobei die Steuereinrichtung den Umrichter zumindest zu Beginn der Pausenzeiträume derart ansteuert, dass der feldbildende Stromanteil einen Nominalwert aufweist.

Die vorliegende Erfindung geht weiterhin aus von einem Steuerprogramm, das Maschinencode umfasst, der von einer Steuereinrichtung für einen eine Statorwicklung einer Asynchronmaschine an ein Versorgungsnetz anschaltenden Umrichter abarbeitbar ist, wobei die Abarbeitung des Maschinencodes durch die Steuereinrichtung bewirkt, dass die Steuereinrichtung ein derartiges Betriebsverfahren ausführt.

Die vorliegende Erfindung geht weiterhin aus von einer Steuereinrichtung für einen eine Statorwicklung einer Asynchronmaschine an ein Versorgungsnetz anschaltenden Umrichter, wobei die Steuereinrichtung mit einem derartigen Steuerprogramm programmiert ist, so dass sie im Betrieb ein derartiges Betriebsverfahren ausführt.

Die vorliegende Erfindung geht weiterhin aus von einer Kombination einer Asynchronmaschine und eines Umrichters,

- wobei die Asynchronmaschine einen Stator und einen Rotor aufweist,
- wobei im Stator eine Statorwicklung angeordnet ist,
- wobei der Rotor eine durch eine Rotorinduktivität des Rotors und einen Rotorwiderstand des Rotors definierte Rotorzeitkonstante aufweist,
- wobei die Statorwicklung über den Umrichter an ein Versorgungsnetz anschaltbar ist, so dass in der Statorwicklung ein Statorstrom fließt,
- wobei der Umrichter eine derartige Steuereinrichtung aufweist.

Asynchronmaschinen werden meist als Antriebe motorisch eingesetzt. Beispielsweise können sie bei Produktionsmaschinen wie beispielsweise Pressen, Verpackungsmaschinen oder Querschneidern und dergleichen mehr eingesetzt werden. Sie können aber auch als Generatoren eingesetzt werden, sei es als Generator im engeren Sinn, der permanent generatorisch betrieben wird, sei es als Antrieb, der kurzzeitig im generatorischen Betrieb arbeitet, normalerweise jedoch motorisch betrieben wird.

Zum Betrieb der Asynchronmaschine wird die Statorwicklung über eine an sich bekannte feldorientierte Regelung mit einem Statorstrom beaufschlagt. Der Statorstrom setzt sich aus dem feldbildenden und dem momentbildenden Stromanteil zusammen, wobei die beiden Stromanteile um 90° elektrisch gegeneinander phasenversetzt sind. Der feldbildende Stromanteil - oftmals auch als Magnetisierungsstrom bezeichnet - generiert im Rotor der Asynchronmaschine einen magnetischen Fluss, der im Zusammenwirken mit dem momentbildenden Stromanteil die elektromotorische Kraft erzeugt. Das zwischen dem Stator und dem Rotor wirkende Drehmoment (= die elektromotorische Kraft) ist proportional zu dem Produkt des magnetischen Flusses mit dem momentbildenden Stromanteil.

Im Stand der Technik wird der feldbildende Stromanteil in der Regel konstant gehalten. Eine Ausnahme gilt nur oberhalb einer Grenzdrehzahl. Oberhalb der Grenzdrehzahl wird der feldbildende Stromanteil proportional zu 1/n (mit n = Drehzahl) abgesenkt, damit die Klemmenspannung der Asynchronmaschine nicht zu groß wird. Im Stand der Technik wird also zur Beeinflussung der elektromotorischen Kraft im Normalbetrieb (d.h. unterhalb der Grenzdrehzahl) ausschließlich der momentbildende Stromanteil variiert. Der feldbildende Stromanteil wird nur variiert, wenn dies aufgrund einer Überschreitung der Grenzdrehzahl zwingend erforderlich ist.

Aufgrund des Phasenversatzes der beiden Stromanteile um 90° elektrisch ergibt sich der Statorstrom als geometrische Summe der beiden Stromanteile:

$$I = \sqrt{I1^2 + I2^2} \qquad (1)$$

Hierbei bezeichnet I den Statorstrom, I1 den feldbildenden Stromanteil und I2 den momentbildenden Stromanteil.

Die ohmsche Verlustleistung im Stator der Asynchronmaschine ist proportional zum Quadrat des Statorstroms. Wenn die Asynchronmaschine mit einem bestimmten feldbildenden Stromanteil betrieben werden soll und weiterhin ein bestimmtes maximales Drehmoment abgeben können soll, muss die Asynchronmaschine im Stand der Technik also für einen maximalen Statorstrom I gemäß Gleichung 1 ausgelegt werden. Dieser Strom ist größer als jeder der beiden Stromanteile I1, I2. In analoger Weise muss auch der Umrichter für einen maximalen Statorstrom I gemäß Gleichung 1 ausgelegt werden.

In vielen Fällen wird die Asynchronmaschine derart betrieben, dass sie kurzzeitig (d.h. während der Lastzeiträume) ein hohes Drehmoment aufbringen muss. Beispiele sind der Betrieb einer Presse oder kurzzeitiges Beschleunigen oder Abbremsen einer Achse. Während der verbleibenden Zeiten (das heißt während der Pausenzeiträume) wird die Asynchronmaschine hingegen derart betrieben, dass sie nur ein deutlich geringeres Drehmoment aufbringen muss. Dennoch müssen die Asynchronmaschine und der Umrichter für die maximalen Belastungen ausgelegt werden.

Aufgrund der kurzzeitigen hohen Belastungen schwankt weiterhin die Betriebstemperatur der Leistungshalbleiter des Umrichters erheblich. Diese Temperaturschwankungen führen zu einer deutlichen Verkürzung der Lebensdauer der Leistungshalbleiter.

Zur Erhöhung der Zuverlässigkeit des Umrichters und der Asynchronmaschine werden der Umrichter und die Asynchronmaschine im Stand der Technik entsprechend groß dimensioniert. Alternativ ist es für den Umrichter möglich, den Umrichter zwar kleiner zu dimensionieren, den Umrichter jedoch entsprechend einem vorbeugenden Wartungsplan rechtzeitig vor einem erwarteten Ausfall auszutauschen.

Aus der US 2002/0 030 465 A1 ist ein Betriebsverfahren für einen Induktionsmotor bekannt, bei dem eine Steuereinrichtung einen Umrichter ansteuert und dadurch die Statorwicklung des Induktionsmotors an eine Versorgung einschaltet. Dadurch fließt in der Statorwicklung ein Statorstrom, der seinerseits einen feldbildenden und einen momentbildenden Stromanteil aufweist. Es wird erfasst, ob ein Lastanstieg, also die zeitliche Änderung der Last, einen vorbestimmten Wert übersteigt. Immer wenn dies der Fall ist, steuert die Steuereinrichtung den Umrichter derart an, dass der feldbildende Stromanteil abgesenkt wird. Während der übrigen Zeiten weist der feldbildende Stromanteil einen Nominalwert auf.

Die Aufgabe der vorliegenden Erfindung besteht darin, Möglichkeiten zu schaffen, mittels derer der Umrichter und die Asynchronmaschine unter Beibehaltung des maximalen Leistungsvermögens kleiner dimensioniert werden können.

Die Aufgabe wird durch ein Betriebsverfahren mit den Merkmalen des Anspruchs 1 gelöst. Vorteilhafte Ausgestaltungen des Betriebsverfahrens sind Gegenstand der abhängigen Ansprüche 2 bis 9.

Erfindungsgemäß wird ein Betriebsverfahren der eingangs genannten Art dadurch ausgestaltet,

- dass die Steuereinrichtung den Umrichter während der Lastzeiträume derart ansteuert, dass der feldbildende Stromanteil einen niedrigeren Wert als den Nominalwert aufweist,
- dass der Steuereinrichtung vorab der Zeitpunkt des Beginns des jeweils nächsten Lastzeitraums bekannt ist und
- dass die Steuereinrichtung am Ende des jeweiligen Pausenzeitraums den feldbildenden Stromanteil auf einen Endwert oberhalb des Nominalwerts erhöht.

Der Erfindung liegt zunächst die Erkenntnis zugrunde, dass der im Rotor der Asynchronmaschine generierte magnetische Fluss bei einem Absenken des feldbildenden Stromanteils nicht abrupt auf Null absinkt, sondern - beispielsweise - bei einem vollständigen Abschalten des feldbildenden Stromanteils - nur gemäß der exponentiellen Beziehung

$$F(t) = F0 \cdot e^{-t/T} \qquad\qquad (2)$$

absinkt. F0 ist hierbei der magnetische Fluss zum Zeitpunkt des Abschaltens des feldbildenden Stromanteils, t die Zeit und T die Rotorzeitkonstante. Die Rotorzeitkonstante T ergibt sich hierbei zu

$$T = \frac{LR}{RR} \qquad\qquad (3)$$

wobei LR die Induktivität des Rotors (Rotorinduktivität) und RR der Widerstand des Rotors (Rotorwiderstand) sind. Für kurze Zeit - beispielsweise die Rotorzeitkonstante, vorzugsweise die Hälfte, ein Drittel oder einen noch kleineren Bruchteil der Rotorzeitkonstante - bleibt also auch ohne feldbildenden Stromanteil ein nennenswerter magnetischer Fluss erhalten.

Dieser "Speichereffekt" kann somit dazu genutzt werden, den feldbildenden Stromanteil abzusenken und gleichzeitig die dadurch frei werdende Stromtragfähigkeit des Umrichters zum Beaufschlagen der Statorwicklung der Asynchronmaschine mit einem entsprechend höheren momentbildenden Stromanteil zu nutzen. Dadurch ist es möglich, bei gleicher Belastung des Umrichters und der Asynchronmaschine kurzzeitig ein höheres Drehmoment zu erreichen, als dies ohne Absenken des feldbildenden Stromanteils möglich wäre.

Der magnetische Fluss im Rotor sinkt während der Lastzeiträume ab. Er muss daher während der Pausenzeiträume wieder aufgebaut werden. Dies ist in der Regel jedoch problemlos möglich, da einerseits die Pausenzeiträume erheblich länger als die Lastzeiträume sind und andererseits das zwischen dem Stator und dem Rotor wirkende Drehmoment während der Pausenzeiträume meist relativ gering ist, so dass auch nur ein geringer momentbildender Stromanteil benötigt wird und demzufolge die geometrische Summe des momentbildenden Stromanteils und des - dann höheren - feldbildenden Stromanteils - auch während der Pausenzeiträume im Ergebnis relativ niedrig bleibt.

Durch das erfindungsgemäße Erhöhen des feldbildenden Stromanteils unmittelbar vor dem jeweiligen Lastzeitraum kann weiterhin trotz des Absenkens des feldbildenden Stromanteils im Lastzeitraum das kurzzeitig - d.h. während des jeweiligen Lastzeitraums - von der Asynchronmaschine abgebbare Drehmoment auf einem hohen Niveau gehalten werden. Das Erhöhen des feldbildenden Stromanteils kann beispielsweise während der letzten 30 %, 20 %, 10 % oder eines noch kürzeren Zeitraums erfolgen.

Gegenüber der Vorgehensweise des Standes der Technik kann durch die erfindungsgemäße Vorgehensweise somit nicht nur die Belastungsspitze während der Lastzeiträume reduziert (und eventuell sogar vollständig eliminiert) werden, sondern darüber hinaus auch der zeitliche Verlauf der Amplitude des Statorstroms insgesamt vergleichmäßigt werden. Dies erhöht in erheblichem Umfang die Lebensdauer der Leistungshalbleiter des Umrichters.

Es ist möglich, dass die Steuereinrichtung den Umrichter während der Lastzeiträume derart ansteuert, dass der feldbildende Stromanteil den Wert Null annimmt. Vorzugsweise erfolgt die Ansteuerung jedoch derart, dass der feldbildende Stromanteil größer als 0 ist. Beispielsweise kann die Ansteuerung derart erfolgen, dass der feldbildende Stromanteil in einem vorbestimmten Verhältnis zum momentbildenden Stromanteil steht. Denn aufgrund der geometrischen Addition der Stromanteile gemäß Gleichung 1 bewirkt ein feldbildender Stromanteil von beispielsweise x % des momentbildenden Stromanteils für einen hinreichend kleinen Prozentanteil x in erster Näherung lediglich eine Erhöhung des Statorstroms um $x^2/2$ %, bezogen auf den momentbildenden Stromanteil. Wenn also beispielsweise der feldbildende Stromanteil 20 % des momentbildenden Stromanteils beträgt, bewirkt dies lediglich eine Erhöhung des Statorstroms um 2 %. Sogar eine Beibehaltung des feldbildenden Stromanteils bei 50 % des momentbildenden Stromanteils bewirkt, bezogen auf den momentbildenden Stromanteil, lediglich eine relativ geringe Erhöhung des Statorstroms, nämlich in erster Näherung um 12,5 %, exakt gerechnet um 11,8 %.

Das Absenken des magnetischen Flusses wird durch die Beibehaltung des - wenn auch reduzierten - feldbildenden Stromanteils hingegen deutlich verlangsamt.

In vielen Fällen sind der Steuereinrichtung die Zeitdauer des jeweiligen Lastzeitraums und das während des jeweiligen Lastzeitraums zwischen dem Stator und dem Rotor wirkende jeweilige Drehmoment vorab bekannt. In diesem Fall ist es möglich,
dass die Steuereinrichtung den Umrichter derart ansteuert, dass der zum Erreichen des jeweiligen Drehmoments während des jeweiligen Lastzeitraums erforderliche Statorstrom einen minimalen Wert aufweist. Dadurch können die thermischen Verluste in der Asynchronmaschine minimiert werden. In vielen Fällen können weiterhin die Temperaturschwankungen im Umrichter reduziert werden.

In manchen Fällen sind der Steuereinrichtung zusätzlich auch die Zeitdauer des auf den jeweiligen Lastzeitraum folgenden Pausenzeitraums und das während dieses Pausenzeitraums zwischen dem Stator und dem Rotor wirkende jeweilige Drehmoment vorab bekannt. In diesem Fall ist es möglich, dass die Steuereinrichtung den Umrichter derart ansteuert, dass eine Differenz zwischen einem während des jeweiligen Lastzeitraums und des folgenden Pausenzeitraums auftretenden maximalen Statorstrom und einem während des jeweiligen Lastzeitraums und des folgenden Pausenzeitraums auftretenden minimalen Statorstrom minimiert wird. Dadurch können die Temperaturschwankungen im Umrichter noch weiter reduziert werden.

Wie bereits erwähnt, weist der Rotor eine durch eine Rotorinduktivität des Rotors und einen Rotorwiderstand des Rotors definierte Rotorzeitkonstante auf. Die Lastzeiträume weisen vorzugsweise Zeitdauern auf, die kleiner als die Rotorzeitkonstante sind, vorzugsweise kleiner als die Hälfte der Rotorzeitkonstante, insbesondere kleiner als ein Drittel der Rotorzeitkonstante. Dadurch wird gewährleistet, dass trotz der Reduzierung des feldbildenden Stromanteils im Rotor ein nennenswerter magnetischer Fluss erhalten bleibt. Die Pausenzeiträume hingegen weisen vorzugsweise Zeitdauern auf, die größer als die Rotorzeitkonstante sind, vorzugsweise größer als das Doppelte der Rotorzeitkonstante, insbesondere größer als das Dreifache der Rotorzeitkonstante. Dadurch wird erreicht, dass während der Pausenzeiträume genügend Zeit für den Wiederaufbau des magnetischen Flusses im Rotor zur Verfügung steht.

In der Regel betreibt die Steuereinrichtung die Asynchronmaschine unterhalb ihrer Nenndrehzahl, d.h. in einem Drehzahlbereich, in dem der Nominalwert des feldbildenden Stromanteils unabhängig von der Drehzahl des Rotors ist. In diesem Fall kann die Steuereinrichtung die Asynchronmaschine alternativ mit konstanter oder variierender Drehzahl betreiben. Wenn ausnahmsweise die Steuereinrichtung die Asynchronmaschine oberhalb ihrer Nenndrehzahl betreibt, betreibt sie die Asynchronmaschine im Rahmen des erfindungsgemäßen Betriebsverfahrens vorzugsweise mit konstanter Drehzahl.

Aufgrund des Absenkens des feldbildenden Stromanteils während der Lastzeiträume sinkt der magnetische Fluss - wenn oftmals auch nur geringfügig und verzögert - ab. Da das generierte Drehmoment proportional zum Produkt des momentbildenden Stromanteils und des magnetischen Flusses ist, muss somit der momentbildende Stromanteil entsprechend vergrößert werden. Um ein gewünschtes Drehmoment möglichst zuverlässig und genau einstellen zu können, ermittelt die Steuereinrichtung daher zumindest während der Lastzeiträume einen im Rotor herrschenden magnetischen Fluss und berücksichtigt den ermittelten magnetischen Fluss bei der Ermittlung des momentbildenden Stromanteils.

Die Aufgabe wird weiterhin durch ein Steuerprogramm mit den Merkmalen des Anspruchs 8 gelöst. Erfindungsgemäß ist ein Steuerprogramm der eingangs genannten Art dadurch ausgestaltet, dass die Abarbeitung des Maschinencodes durch die Steuereinrichtung bewirkt, dass die Steuereinrichtung ein erfindungsgemäßes Betriebsverfahren ausführt.

Die Aufgabe wird weiterhin durch eine Steuereinrichtung mit den Merkmalen des Anspruchs 9 gelöst. Erfindungsgemäß ist die Steuereinrichtung mit einem erfindungsgemäßen Steuerprogramm programmiert, so dass sie im Betrieb ein erfindungsgemäßes Betriebsverfahren ausführt.

Die Aufgabe wird weiterhin durch eine Kombination einer Asynchronmaschine und eines Umrichters mit den Merkmalen des Anspruchs 10 gelöst. Erfindungsgemäß weist bei einer Kombination der eingangs genannten Art der Umrichter eine erfindungsgemäße Steuereinrichtung auf.

Die oben beschriebenen Eigenschaften, Merkmale und Vorteile dieser Erfindung sowie die Art und Weise, wie diese erreicht werden, werden klarer und deutlicher verständlich im Zusammenhang mit der folgenden Beschreibung der Ausführungsbeispiele, die in Verbindung mit den Zeichnungen näher erläutert werden. Hierbei zeigen in schematischer Darstellung:

FIG 1          eine Asynchronmaschine einschließlich ihrer Anschaltung an ein Versorgungsnetz,
FIG 2          ein Stromdiagramm und
FIG 3 bis 8    Zeitdiagramme.

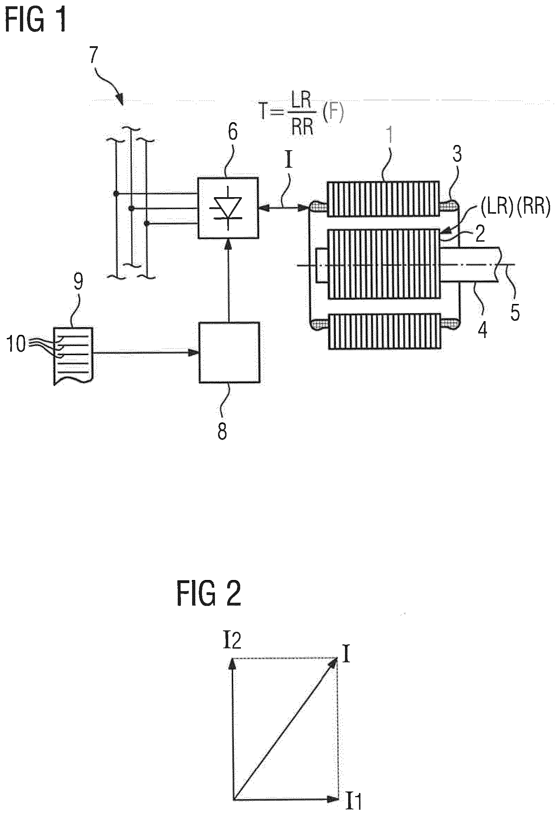

Gemäß FIG 1 weist eine Asynchronmaschine einen Stator 1 und einen Rotor 2 auf. Im Stator 1 ist eine Statorwicklung 3 angeordnet. Der Rotor 2 ist auf einer Rotorwelle 4 angeordnet. Die Rotorwelle 4 ist in Lagern (nicht dargestellt) gelagert, so dass der Rotor 2 relativ zum Stator 1 um eine Rotationsachse 5 rotierbar ist. Der Rotor 2 seinerseits weist eine Rotorinduktivität LR (elektrische Einheit: Henry) auf. Der Rotor 2 weist weiterhin einen elektrischen Widerstand RR (elektrische Einheit: Ohm) auf. Der Quotient von Rotorinduktivität LR und Rotorwiderstand RR definiert gemäß der Beziehung

$$T = \frac{LR}{RR} \qquad\qquad\qquad (4)$$

eine Rotorzeitkonstante T.

Der Asynchronmaschine ist ein Umrichter 6 zugeordnet. Über den Umrichter 6 ist die Statorwicklung 3 an ein Versorgungsnetz 7 anschaltbar. Das Versorgungsnetz 7 ist in der Regel ein Drehstromnetz. In Einzelfällen kann das Versorgungsnetz 7 jedoch auch ein (einphasiges) Wechselstromnetz oder ein Gleichstromnetz sein. Entsprechend der Anschaltung der Statorwicklung 3 an das Versorgungsnetz 7 fließt in der Statorwicklung 3 ein Statorstrom I. Der Statorstrom I ist stets zeitabhängig und in der Regel mehrphasig.

Der Umrichter 6 wird über eine dem Umrichter 6 zugeordnete Steuereinrichtung 8 gesteuert. Die Steuereinrichtung 8 ist mit einem Steuerprogramm 9 programmiert. Das Steuerprogramm 9 umfasst Maschinencode 10, der von der Steuereinrichtung 8 abarbeitbar ist. Die Abarbeitung des Maschinencodes 10 durch die Steuereinrichtung 8 (bzw. die Programmierung der Steuereinrichtung 8 mit dem Steuerprogramm 9) bewirkt, dass die Steuereinrichtung 8 ein Betriebsverfahren ausführt, das nachstehend näher erläutert wird.

Die Ansteuerung des Umrichters 6 durch die Steuereinrichtung 8 bewirkt, ganz allgemein gesprochen, das Anschalten der Statorwicklung 3 an das Versorgungsnetz 7 und dadurch das Fließen des Statorstroms I in der Statorwicklung 3. Der Statorstrom I weist entsprechend der Darstellung in FIG 2 einen feldbildenden Stromanteil I1 und einen momentbildenden Stromanteil I2 auf. Der feldbildende Stromanteil I1 generiert im Rotor 2 der Asynchronmaschine einen magnetischen Fluss F. Der momentbildende Stromanteil I2 generiert im Zusammenwirken mit dem magnetischen Fluss F ein Drehmoment M. Das generierte Drehmoment M ist proportional zum Produkt des momentbildenden Stromanteils I2 und des magnetischen Flusses F.

Die beiden Stromanteile I1, I2 sind gemäß FIG 2 um 90° elektrisch gegeneinander phasenversetzt. Sie addieren sich daher gemäß der Beziehung

$$I = \sqrt{I1^2 + I2^2} \qquad (5)$$

 zum Statorstrom I. Im Einzelfall - nämlich dann, wenn einer der beiden Stromanteile I1, I2 null ist, - korrespondiert der Statorstrom I mit dem verbleibenden Stromanteil I1, I2.

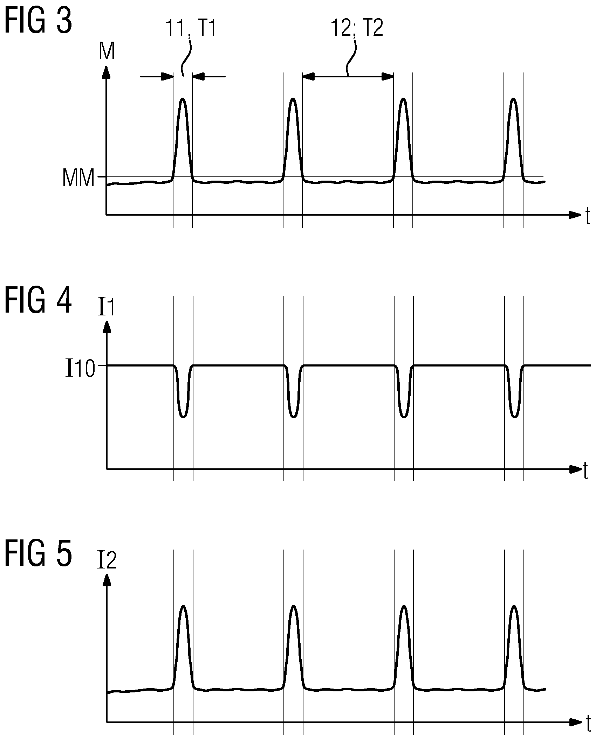

Die Ansteuerung des Umrichters 6 durch die Steuereinrichtung 8 als Funktion der Zeit t erfolgt entsprechend der Darstellung in FIG 3 oftmals derart, dass das Drehmoment M zwischen dem Stator 1 und dem Rotor 2 während Lastzeiträumen 11 - in der Regel permanent, zumindest aber temporär - oberhalb eines vorbestimmten Grenzmoments MM liegt. Insbesondere beträgt das Maximum des Drehmoments M innerhalb der Lastzeiträume 11 ein Mehrfaches des vorbestimmten Grenzmoments MM. Der Quotient zwischen dem Maximum des Drehmoments M und dem vorbestimmten Grenzmoment MM muss hierbei nicht notwendigerweise ganzzahlig sein. Entscheidend ist, dass der Quotient größer als 2 ist. Oftmals ist der Quotient sogar größer als 5, manchmal sogar größer als 10.

Zwischen je zwei unmittelbar aufeinanderfolgenden Lastzeiträumen 11 liegt ein Pausenzeitraum 12. Die Lastzeiträume 11 sind also durch die Pausenzeiträume 12 voneinander getrennt. Während der Pausenzeiträume 12 steuert die Steuereinrichtung 8 den Umrichter 6 derart an, dass zwischen dem Stator 1 und dem Rotor 2 ein Drehmoment M wirkt, das (permanent) unterhalb des vorbestimmten Grenzmoments MM liegt.

Die Lastzeiträume 11 weisen erste Zeitdauern T1 auf. Die ersten Zeitdauern T1 sind vorzugsweise kleiner als die Rotorzeitkonstante T. Insbesondere können sie kleiner als die Hälfte der Rotorzeitkonstante T sein, beispielsweise kleiner als ein Drittel der Rotorzeitkonstante T. Die ersten Zeitdauern T1 der Lastzeiträume 11 können auch noch kleiner sein. Je kürzer die ersten Zeitdauern T1 sind, in desto stärkerem Umfang liegt ein pulsförmiger Betrieb der Asynchronmaschine vor. Die ersten Zeitdauern T1 der Lastzeiträume 11 können untereinander gleich groß sein.

Die Pausenzeiträume 12 weisen zweite Zeitdauern T2 auf. Die zweiten Zeitdauern T2 hingegen sind größer als die Rotorzeitkonstante T. Insbesondere können sie größer als das Doppelte oder Dreifache der Rotorzeitkonstante T sein. Die Pausenzeiträume 12 können auch noch größer sein. Die zweiten Zeitdauern T2 der Pausenzeiträume 12 können untereinander gleich groß sein.

Insbesondere dann, wenn sowohl die ersten Zeitdauern T1 untereinander (exakt oder im wesentlichen) gleich groß sind als auch die zweiten Zeitdauern T2 untereinander (exakt oder im wesentlichen) gleich groß sind, liegt ein zyklischer bzw. periodischer Betrieb der Asynchronmaschine vor.

Zumindest zu Beginn der Pausenzeiträume 12 - entsprechend der Darstellung in FIG 4 sogar während der gesamten Pausenzeiträume 12 - steuert die Steuereinrichtung 8 den Umrichter 6 derart an, dass der feldbildende Stromanteil I1 einen Nominalwert I10 aufweist.

Während der Lastzeiträume 11 soll entsprechend der Darstellung in FIG 3 zwischen dem Stator 1 und im Rotor 2 ein entsprechend hohes Drehmoment M wirken. Die Steuereinrichtung 8 steuert den Umrichter 6 daher entsprechend der Darstellung in FIG 5 derart an, dass der momentbildende Stromanteil I2 deutlich ansteigt. Gleichzeitig aber steuert die Steuereinrichtung 8 entsprechend der Darstellung in FIG 4 den Umrichter 6 derart an, dass der feldbildende Stromanteil I1 einen niedrigeren Wert als den Nominalwert I10 aufweist.

Wenn der Betrag des Nominalwertes I10 kleiner als der Betrag des momentbildenden Stromanteils I2 während des jeweiligen Lastzeitraums 11 ist, ist es möglich, dass der feldbildende Stromanteil I1 auf den Wert 0 abgesenkt wird. Alternativ ist es in diesem Fall möglich, dass der feldbildende Stromanteil I1 auch in diesem Fall größer als 0 ist. Beispielsweise kann die Steuereinrichtung 8 den Umrichter 6 während der Lastzeiträume 11 derart ansteuern, dass der feldbildende Stromanteil I1 in einem vorbestimmten Verhältnis zum momentbildenden Stromanteil I2 steht, beispielsweise bei 20 %, 30 % oder 50 % des momentbildenden Stromanteils I2. Wenn der Betrag des Nominalwertes I10 hingegen größer als der Betrag des momentbildenden Stromanteils I2 während des jeweiligen Lastzeitraums 11 ist, wird der feldbildende Stromanteil I1 vorzugsweise so weit abgesenkt, dass der Statorstrom I (bzw. dessen Betrag) konstant bleibt:

$$I1 = \sqrt{I10^2 - I2^2} \qquad (6)$$

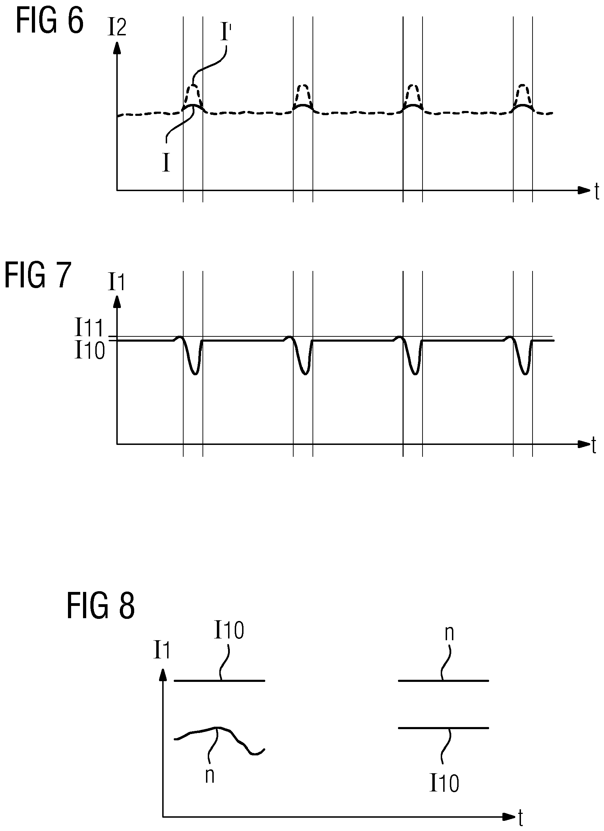

Unabhängig davon, welche der genannten Vorgehensweisen ergriffen wird, kann jedoch entsprechend der Darstellung in FIG 6 erreicht werden, dass der erfindungsgemäß ermittelte Statorstrom I in erheblich geringerem Umfang schwankt als ein Statorstrom I', wie er im Stand der Technik auftreten würde.

Je nach Lage des Einzelfalls sind verschiedene weitergehende Optimierungen des obenstehend geschilderten Prinzips möglich. So ist es beispielsweise möglich, dass der Steuereinrichtung 8 die Zeitdauer T1 des jeweiligen Lastzeitraums 11 und das während des jeweiligen Lastzeitraums 11 zwischen dem Stator 1 und dem Rotor 2 wirkende jeweilige Drehmoment M (idealerweise der vollständige zeitliche Verlauf, zumindest aber das Maximum) vorab bekannt sind. In diesem Fall kann die Steuereinrichtung 8 den Umrichter 6 derart ansteuern, dass der zum Erreichen des jeweiligen Drehmoments M während des jeweiligen Lastzeitraums 11 erforderliche Statorstrom I einen minimalen Wert aufweist.

Weiterhin ist es möglich, dass die Steuereinrichtung 8 den im Rotor 2 herrschenden magnetischen Fluss F ermittelt und den ermittelten magnetischen Fluss F bei der Ermittlung des momentbildenden Stromanteils I2 berücksichtigt. Insbesondere kann die Steuereinrichtung 8 bei bekanntem gewünschtem Verlauf des Drehmoments M mit variierendem Fluss F den momentbildenden Stromanteil I2 entsprechend nachführen, so dass zwischen dem Stator 1 und dem Rotor 2 zu jedem Zeitpunkt tatsächlich das gewünschte Drehmoment M wirkt. Es ist möglich, diese Vorgehensweise permanent auszuführen, also sowohl während der Lastzeiträume 11 als auch während der Pausenzeiträume 12. Zumindest während der Lastzeiträume 11 sollte diese Maßnahme jedoch ergriffen werden. Zur Ermittlung des magnetischen Flusses F stehen dem Fachmann verschiedene Vorgehensweisen zur Verfügung. So ist es beispielsweise möglich, anhand des zeitlichen Verlaufs des feldbildenden Stromanteils I1 in Verbindung mit bekannten, zeitlich unveränderlichen Größen der Asynchronmaschine den zeitlichen Verlauf des magnetischen Flusses F zu modellieren. Alternativ ist es möglich, den magnetischen Fluss F mittels eines entsprechenden Sensors direkt zu messen. Wiederum alternativ ist es möglich, andere elektrische Größen - insbesondere die Klemmenspannungen und/oder die Phasenströme der Asynchronmaschine zu erfassen und aus diesen Größen den magnetischen Fluss F zu ermitteln. Idealerweise sind der Steuereinrichtung 8 auch die Zeitdauer T2 des auf den jeweiligen Lastzeitraums 11 folgenden Pausenzeitraums 12 und das während dieses Pausenzeitraums 12 zwischen dem Stator 1 und dem Rotor 2 wirkende jeweilige Drehmoment M vorab bekannt (zumindest im wesentlichen). In diesem Fall kann die Steuereinrichtung 8 den Umrichter 6 derart ansteuern, dass eine Differenz zwischen einem während des jeweiligen Lastzeitraums 11 und des folgenden Pausenzeitraums 12 auftretenden maximalen Statorstrom I und einem während des jeweiligen Lastzeitraums 11 und des folgenden Pausenzeitraums 12 auftretenden minimalen Statorstrom I minimiert wird. Mit anderen Worten: Man betrachtet eine "Periode", bestehend aus einem Lastzeitraum 11 und dem folgenden Pausenzeitraums 12. Während dieser Periode weist zu irgendeinem Zeitpunkt der Statorstrom I einen maximalen Wert auf, zu irgend einem anderen Zeitpunkt einen minimalen Wert. Man versucht, die Differenz zwischen dem maximalen Wert und dem minimalen Wert so weit wie möglich zu reduzieren, so dass also die Spannbreite minimiert wird. Ein konkretes Beispiel dieser Vorgehensweise ist die obenstehend erläuterte Ermittlung gemäß Gleichung 6. Weiterhin ist es möglich, dass der Steuereinrichtung 8 vorab der Zeitpunkt des Beginns des jeweils nächsten Lastzeitraums 11 bekannt ist. In diesem Fall kann entsprechend der Darstellung von FIG 7 die Steuereinrichtung 8 am Ende des jeweiligen Pausenzeitraums 11 den feldbildenden Stromanteil I1 auf einen Endwert I11 oberhalb des Nominalwerts I10 erhöhen.

In der Regel - siehe in FIG 8 die linke Darstellungshälfte - betreibt die Steuereinrichtung 8 die Asynchronmaschine in einem Drehzahlbereich, in dem der Nominalwert I10 unabhängig von der Drehzahl n des Rotors 2 ist. Bei diesem Betrieb - dem Betrieb unterhalb der Nenndrehzahl - ist der Nominalwert I10 konstant. Dies gilt unabhängig davon, ob die Drehzahl n des Rotors 2 schwankt oder konstant ist. Alternativ - siehe in FIG 8 die rechte Darstellungshälfte - kann die Steuereinrichtung 8 die Asynchronmaschine oberhalb der Nenndrehzahl betreiben, also im Feldschwächungsbereich. In diesem Fall betreibt die Steuereinrichtung 8 die Asynchronmaschine mit konstanter Drehzahl n.

Die vorliegende Erfindung weist viele Vorteile auf. Insbesondere ist die Asynchronmaschine einschließlich Umrichter 6 und Steuereinrichtung 8 bei gleicher Leistungsfähigkeit kleiner und damit kostengünstiger realisierbar als im Stand der Technik. Weiterhin weist der Umrichter 6 eine - oftmals erheblich - größere Lebensdauer auf.

Obwohl die Erfindung im Detail durch das bevorzugte Ausführungsbeispiel näher illustriert und beschrieben wurde, so ist die Erfindung nicht durch die offenbarten Beispiele eingeschränkt, und der Schutzumfang der Erfindung wird durch die Ansprüche definiert.

## Patentansprüche

1. Betriebsverfahren für eine Asynchronmaschine, die einen Stator (1) und einen Rotor (2) aufweist, wobei im Stator (1) eine Statorwicklung (3) angeordnet ist,

   - wobei eine Steuereinrichtung (8) einen Umrichter (6) ansteuert, so dass der Umrichter (6) die Statorwicklung (3) an ein Versorgungsnetz (7) anschaltet, so dass in der Statorwicklung (3) ein Statorstrom (I) fließt,
   - wobei der Statorstrom (I) einen feldbildenden Stromanteil (I1) und einen momentbildenden Stromanteil (I2) aufweist,
   - wobei die Steuereinrichtung (8) den Umrichter (6) derart ansteuert, dass während Lastzeiträumen (11) zwischen dem Stator (1) und dem Rotor (2) ein Drehmoment (M) wirkt, das zumindest temporär oberhalb eines vorbestimmten Grenzmoments (MM) liegt und dessen Maximum ein Mehrfaches des vorbestimmten Grenzmoments (MM) beträgt,
   - wobei die Lastzeiträume (11) durch Pausenzeiträume (12) voneinander getrennt sind,

- wobei die Steuereinrichtung (8) den Umrichter (6) während der Pausenzeiträume (12) derart ansteuert, dass zwischen dem Stator (1) und dem Rotor (2) ein Drehmoment (M) wirkt, das permanent unterhalb des vorbestimmten Grenzmoments (MM) liegt,

- wobei die Steuereinrichtung (8) den Umrichter (6) zumindest zu Beginn der Pausenzeiträume (12) derart ansteuert, dass der feldbildende Stromanteil (I1) einen Nominalwert (I10) aufweist,

- wobei die Steuereinrichtung (8) den Umrichter (6) während der Lastzeiträume (11) derart ansteuert, dass der feldbildende Stromanteil (I1) einen niedrigeren Wert als den Nominalwert (I10) aufweist,

- wobei der Steuereinrichtung (8) vorab der Zeitpunkt des Beginns des jeweils nächsten Lastzeitraums (11) bekannt ist und

- wobei die Steuereinrichtung (8) am Ende des jeweiligen Pausenzeitraums (12) den feldbildenden Stromanteil (I1) auf einen Endwert (I11) oberhalb des Nominalwerts (I10) erhöht.

2. Betriebsverfahren nach Anspruch 1,
   **dadurch gekennzeichnet ,**
   **dass** die Steuereinrichtung (8) den Umrichter (6) während der Lastzeiträume (11) derart ansteuert, dass der feldbildende Stromanteil (I1) größer als 0 ist.

3. Betriebsverfahren nach Anspruch 2,
   **dadurch gekennzeichnet,**
   **dass** die Steuereinrichtung (8) den Umrichter (6) während der Lastzeiträume (11) derart ansteuert, dass der feldbildende Stromanteil (I1) in einem vorbestimmten Verhältnis zum momentbildenden Stromanteil (I2) steht.

4. Betriebsverfahren nach einem der obigen Ansprüche,
   **dadurch gekennzeichnet,**
   **dass** der Rotor (2) eine durch eine Rotorinduktivität (LR) des Rotors (2) und einen Rotorwiderstand (RR) des Rotors (2) definierte Rotorzeitkonstante (T) aufweist und dass die Lastzeiträume (11) Zeitdauern (T1) aufweisen, die kleiner als die Rotorzeitkonstante (T) sind, vorzugsweise kleiner als die Hälfte der Rotorzeitkonstante (T), insbesondere kleiner als ein Drittel der Rotorzeitkonstante (T).

5. Betriebsverfahren nach einem der obigen Ansprüche,
   **dadurch gekennzeichnet,**
   **dass** der Rotor (2) eine durch eine Rotorinduktivität (LR) des Rotors (2) und einen Rotorwiderstand (RR) des Rotors (2) definierte Rotorzeitkonstante (T) aufweist und dass die Pausenzeiträume (12) Zeitdauern (T2) aufweisen, die größer als die Rotorzeitkonstante (T) sind, vorzugsweise größer als das Doppelte der Rotorzeitkonstante (T), insbesondere größer als das Dreifache der Rotorzeitkonstante (T).

6. Betriebsverfahren nach einem der obigen Ansprüche,
   **dadurch gekennzeichnet,**
   **dass** die Steuereinrichtung (8) die Asynchronmaschine in einem Drehzahlbereich betreibt, in dem der Nominalwert (I10) unabhängig von der Drehzahl (n) des Rotors (2) ist, und/oder dass die Steuereinrichtung (8) die Asynchronmaschine mit konstanter Drehzahl (n) betreibt.

7. Betriebsverfahren nach einem der obigen Ansprüche,
   **dadurch gekennzeichnet,**
   **dass** die Steuereinrichtung (8) zumindest während der Lastzeiträume (11) einen im Rotor (2) herrschenden magnetischen Fluss (F) ermittelt und dass die Steuereinrichtung (8) den ermittelten magnetischen Fluss (F) bei der Ermittlung des momentbildenden Stromanteils (I2) berücksichtigt.

8. Steuerprogramm, das Maschinencode (10) umfasst, der von einer Steuereinrichtung (8) für einen eine Statorwicklung (3) einer Asynchronmaschine an ein Versorgungsnetz (7) anschaltenden Umrichter (6) abarbeitbar ist, wobei die Abarbeitung des Maschinencodes (10) durch die Steuereinrichtung (8) bewirkt, dass die Steuereinrichtung (8) ein Betriebsverfahren nach einem der obigen Ansprüche ausführt.

9. Steuereinrichtung für einen eine Statorwicklung (3) einer Asynchronmaschine an ein Versorgungsnetz (7) anschaltenden Umrichter (6), wobei die Steuereinrichtung mit einem Steuerprogramm (9) nach Anspruch 8 konfiguriert ist, so dass sie im Betrieb ein Betriebsverfahren nach einem der Ansprüche 1 bis 7 ausführt.

10. Kombination einer Asynchronmaschine und eines Umrichters (6),

- wobei die Asynchronmaschine einen Stator (1) und einen Rotor (2) aufweist,
- wobei im Stator (1) eine Statorwicklung (3) angeordnet ist,
- wobei der Rotor (2) eine durch eine Rotorinduktivität (LR) des Rotors (2) und einen Rotorwiderstand (RR) des Rotors (2) definierte Rotorzeitkonstante (T) aufweist,
- wobei die Statorwicklung (3) über den Umrichter (6) an ein Versorgungsnetz (7) anschaltbar ist, so dass in der Statorwicklung (3) ein Statorstrom (I) fließt,
- wobei der Umrichter (6) eine Steuereinrichtung (8) nach Anspruch 9 aufweist.

**Claims**

1. Operating method for an induction machine that has a stator (1) and a rotor (2), wherein a stator winding (3) is arranged in the stator (1),

   - wherein a control device (8) controls a converter (6) so that the converter (6) connects the stator winding (3) to a power-supply network (7) so that a stator current (I) flows within the stator winding (3),
   - wherein the stator current (I) has a field-forming current component (I1) and a torque-forming current component (I2),
   - wherein the control device (8) controls the converter (6) in such a way that, during load periods (11), a torque (M) acts between the stator (1) and the rotor (2), which at least temporarily lies above a predetermined limit torque (MM) and its maximum is several times the predetermined limit torque (MM),
   - wherein the load periods (11) are separated from each other by periods of rest (12),
   - wherein the control device (8) controls the converter (6) during the periods of rest (12) in such a way that a torque (M) acts between the stator (1) and the rotor (2), which is permanently under the predetermined limit torque (MM),
   - wherein the control device (8) controls the converter (6) at least at the beginning of the periods of rest (12) in such a way that the field-forming current component (I1) has a nominal value (110),
   - wherein the control device (8) controls the converter (6) during the load periods (11) in such a way that the field-forming current component (I1) has a lower value than the nominal value (110),
   - wherein the time of the beginning of the respectively next load period (11) is known to the control device (8) in advance and
   - wherein the control device (8) increases the field-forming current component (I1) to a final value (I11) above the nominal value (110) at the end of the respective period of rest (12).

2. Operating method according to Claim 1,
   **characterized in that**
   the control device (8) controls the converter (6) during the load periods (11) in such a way that the field-forming current component (I1) is greater than 0.

3. Operating method according to Claim 2,
   **characterized in that**
   the control device (8) controls the converter (6) during the load periods (11) in such a way that the field-forming current component (I1) is at a predetermined ratio to the torque-forming current component (I2).

4. Operating method according to one of the above claims,
   **characterized in that**
   the rotor (2) has a rotor time constant (T) defined by a rotor inductance (LR) of the rotor (2) and a rotor resistance (RR) of the rotor (2) and that the load periods (11) have time durations (T1), which are smaller than the rotor time constant (T), preferably smaller than half of the rotor time constant (T), more preferably smaller than a third of the rotor time constant (T).

5. Operating method according to one of the above claims,
   **characterized in that**
   the rotor (2) has a rotor time constant (T) defined by a rotor inductance (LR) of the rotor (2) and a rotor resistance (RR) of the rotor (2) and that the periods of rest (12) have time durations (T2), which are greater than the rotor time constant (T), preferably greater than double the rotor time constant (T), more preferably greater than three times the rotor time constant (T).

**6.** Operating method according to one of the above claims,
**characterized in that**
the control device (8) operates the induction machine within a speed range, in which the nominal value (110) is independent of the speed (n) of the rotor (2) and/or that the control device (8) operates the induction machine at a constant speed (n).

**7.** Operating method according to one of the above claims,
**characterized in that**
the control device (8) detects a predominate magnetic flux (F) in the rotor (2) at least during the load periods (11) and that the control device (8) takes the detected magnetic flux (F) into consideration when determining the torque-forming current component (12).

**8.** Control program, that comprises machine code (10), which can be processed by a control device (8) for a converter (6) connecting a stator winding (3) of an induction machine to a power-supply network (7), wherein the processing of the machine code (10) by the control device (8) causes the control device (8) to carry out an operating method according to one of the above claims.

**9.** Control device for a converter (6) connecting a stator winding (3) of an induction machine to a power-supply network (7), wherein the control device is configured with a control program (9) according to Claim 8 so that, during operation, it carries out an operating method according to one of Claims 1 to 7.

**10.** Combination of an induction machine and a converter (6),

- wherein the induction machine has a stator (1) and a rotor (2),
- wherein a stator winding (3) is arranged within the stator (1),
- wherein the rotor (2) has a rotor time constant (T) defined by a rotor inductance (LR) of the rotor (2) and a rotor resistance (RR) of the rotor (2),
- wherein the stator winding (3) can be connected to a power-supply network (7) via a converter (6) so that a stator current (I) flows within the stator winding (3),
- wherein the converter (6) has a control device (8) according to Claim 9.

## Revendications

**1.** Procédé de fonctionnement pour une machine asynchrone, qui comprend un stator (1) et un rotor (2), dans lequel un enroulement de stator (3) est agencé dans le stator (1),

- dans lequel un dispositif de commande (8) pilote un convertisseur (6), de manière à ce que le convertisseur (6) connecte l'enroulement de stator (3) à un réseau d'alimentation (7), de façon à ce qu'un courant de stator (I) circule dans l'enroulement de stator (3),
- dans lequel le courant de stator (I) comprend une composante de courant formant un champ (I1) et une composante de courant formant un couple (I2),
- dans lequel le dispositif de commande (8) pilote le convertisseur (6) de telle manière que, durant des périodes de charge (11), un couple de rotation (M) s'exerce entre le stator (1) et le rotor (2), qui est au moins temporairement supérieur à un couple seuil prédéterminé (MM) et dont le maximum est un multiple du couple seuil prédéterminé (MM),
- dans lequel les périodes de charge (11) sont séparées les unes des autres par des périodes de repos (12),
- dans lequel le dispositif de commande (8) pilote le convertisseur (6) pendant les périodes de repos (12) de telle manière qu'un couple de rotation (M) s'exerce entre le stator (1) et le rotor (2), qui est constamment en dessous du couple seuil (MM) prédéterminé,
- dans lequel le dispositif de commande (8) pilote le convertisseur (6) au moins au début des périodes de repos (12) de telle manière que la composante de courant formant un champ (I1) a une valeur nominale (I10),
- dans lequel le dispositif de commande (8) pilote le convertisseur (6) pendant les périodes de charge (11) de telle manière que la composante de courant formant un champ (I1) a une valeur inférieure à la valeur nominale (I10),
- dans lequel le moment du début de la prochaine période de charge (11) respective est connu d'avance du dispositif de commande (8),
- dans lequel le dispositif de commande (8) augmente à la fin de la période de repos (12) respective la composante de courant formant un champ (I1) à une valeur finale (I11) supérieure à la valeur nominale (I10).

2. Procédé de fonctionnement selon la revendication 1, **caractérisé en ce que** le dispositif de commande (8) pilote le convertisseur (6) pendant les périodes de charge (11) de manière telle que la composante de courant formant un champ (I1) est supérieure à zéro.

3. Procédé de fonctionnement selon la revendication 2, **caractérisé en ce que** le dispositif de commande (8) pilote le convertisseur (6) pendant les périodes de charge (11) de manière telle que la composante de courant formant un champ (I1) est dans un rapport prédéfini à la composante de courant formant un couple (I2).

4. Procédé de fonctionnement selon l'une des revendications précédentes, **caractérisé en ce que** le rotor (2) présente une constante de temps de rotor (T) définie par une inductance de rotor (LR) du rotor (2) et une résistance de rotor (RR) du rotor (2) et **en ce que** les périodes de charge (11) ont des durées (T1) qui sont inférieures à la constante de temps de rotor (T), de préférence inférieures à la moitié de la constante de temps de rotor (T), en particulier inférieures à un tiers de la constante de temps de rotor (T) .

5. Procédé de fonctionnement selon l'une des revendications précédentes, **caractérisé en ce que** le rotor (2) présente une constante de temps de rotor (T) définie par une inductance de rotor (LR) du rotor (2) et une résistance de rotor (RR) du rotor (2) et **en ce que** les périodes de repos (12) ont des durées (T2) qui sont supérieures à la constante de temps de rotor (T), de préférence supérieures au double de la constante de temps de rotor (T), en particulier supérieures au triple de la constante de temps de rotor (T) .

6. Procédé de fonctionnement selon l'une des revendications précédentes, **caractérisé en ce que** le dispositif de commande (8) fait fonctionner la machine asynchrone dans une plage de vitesses de rotation, dans laquelle la valeur nominale (I10) est indépendante de la vitesse de rotation (n) du rotor (2), et/ou **en ce que** le dispositif de commande (8) fait fonctionner la machine asynchrone à une vitesse de rotation (n) constante.

7. Procédé de fonctionnement selon l'une des revendications précédentes, **caractérisé en ce que** le dispositif de commande (8) détermine un flux (F) magnétique régnant dans le rotor (2) pendant des périodes de charge (11) et **en ce que** le dispositif de commande (8) prend en compte le flux (F) magnétique déterminé dans la détermination de la composante de courant (I2) formant un couple.

8. Programme de commande, qui comprend un code de machine (10), qui est exécutable par un dispositif de commande (8) pour un convertisseur (6) connectant un enroulement de stator (3) d'une machine asynchrone à un réseau d'alimentation (7), dans lequel l'exécution du code machine (10) par le dispositif de commande (8) engendre l'exécution par le dispositif de commande (8) d'un procédé de fonctionnement selon l'une des revendications précédentes.

9. Dispositif de commande pour un convertisseur (6) connectant un enroulement de stator (3) d'une machine asynchrone à un réseau d'alimentation (7), dans lequel le dispositif de commande comprenant un programme de commande (9) selon la revendication 8 est configuré de manière à exécuter, en service, un procédé de fonctionnement selon l'une des revendications 1 à 7.

10. Combinaison d'une machine asynchrone et d'un convertisseur (6),

- dans laquelle la machine asynchrone comprend un stator (1) et un rotor (2),
- dans laquelle un enroulement de stator (3) est agencé dans le stator (1),
- dans laquelle le rotor (2) présente une constante de temps de rotor (T) définie par une inductance de rotor (LR) du rotor (2) et une résistance de rotor (RR) du rotor (2),
- dans laquelle l'enroulement de stator (3) peut être connecté à un réseau d'alimentation (7) par l'intermédiaire d'un convertisseur (6), de façon à ce qu'un courant de stator (I) circule dans l'enroulement de stator (3), et
- dans laquelle le convertisseur (6) comprend un dispositif de commande (8) selon la revendication 9.

# FIG 1

7

$$T = \frac{LR}{RR} \; (F)$$

I

6

1

3

(LR)(RR)

2

5

4

9

10

8

# FIG 2

I2

I

I1

FIG 3

11, T1    12; T2

FIG 4

FIG 5

FIG 6

I2

I'

I

t

FIG 7

I1

I11
I10

t

FIG 8

I1

I10

n

n

I10

t

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 20020030465 A1